# EUROPEAN PATENT SPECIFICATION

(11) **EP 4 596 466 B1**
(45) Date of publication and mention of the grant of the patent: **02.12.2026**
(21) Application number: 25184993.1
(22) Date of filing: 30.10.2020
(51) Int. Cl.: B65G 47/86, B65B 35/36, B65B 35/44, B65B 43/00, B65G 47/84, B67C 3/24, B65B 43/50, B65B 43/60, B67B 1/00, B67B 1/04, B67C 3/00, B65B 59/00, B65B 59/02, B65G 47/28, B67C 7/00

(54) **SYSTEMS AND METHODS FOR HANDLING MULTIPLE CONTAINER TYPES**
SYSTEME UND VERFAHREN ZUR HANDHABUNG VON MEHREREN BEHÄLTERTYPEN
SYSTÈMES ET PROCÉDÉS DE MANIPULATION DE MULTIPLES TYPES DE RÉCIPIENTS

(30) Priority: 30.10.2019 US 201962928350 P
(43) Date of publication of application: 06.08.2025
(62) Document number(s) of the earlier application(s) in accordance with Art. 76 EPC: 20882319.5 / 4 045 441
(73) Proprietor: 764944 Alberta Inc. Operating As Am Jade Co., Calgary, Alberta T2C 4Z8 (CA)
(72) Inventor: BONDI, Robert Donald, Calgary, T2N 3T9 (CA); MERLO, Allan Joseph, Calgary, T2K 2A6 (CA)
(74) Representative: Houghton, Mark Phillip

(56) References cited:
- IT-A1- 201800 003 763
- US-A- 2 359 932
- US-A- 3 537 231
- US-A1- 2017 057 799

## Description

### FIELD

The present invention relates to machines and systems for handling containers through an indexing, filling, closing and sorting process.

### BACKGROUND

Industrial bottling and canning plants that handle non viscous liquids (ex. wine, beer, mineral water, etc.) and/or viscous liquids (ex. oils, condiments etc.) are typically limited to processing only one type of container per system.

The handling equipment and systems often take up a significant footprint, or floor space in a production facility.

In all existing examples of any of the above container handling equipment and systems, the current state of the art is to have a separate set of equipment that has been designed, built and setup specifically to handle only bottles, or cans or other containers. Current day state of the art can, bottle or other container handling equipment is dedicated in nature without the ability to handle multiple container types in one system.

In recent years, there has been exponential growth in micro-manufacturers in the beverage industry. Micro-manufacturing involves small batch brewing and packaging of beverages to smaller, often local but not always, markets. Micro-manufacturers of beverages often change the product that they manufacture from batch to batch and work in small facilities with a goal of versatility.

The present day state of the art dedicated bottle, can and other container handling equipment, be they rotary or inline, do not have the flexibility required in today's micro-manufacturing marketplace. Moreover, should a micro-manufacturer wish to package their beverages in a combination of bottles, cans and other containers, they will be required to house multiple types of handling systems, requiring facilities with much larger footprint than their operations and output justify and going against a goal of minimizing space.

US2359932A discloses a universal closing turret according to the preamble of claim 1 within a closure applying machine in which provision is made for adapting the machine for operation as a capping machine to apply screw closures to a container or as a corking machine to firmly set previously inserted corks in the containers in a manner such as to necessitate a minimum of adjustments and changes to enable the machine to perform either operation.

A need therefore exists for container handling devices and systems that can handle multiple container types through various stages of the indexing, filling, closing and transferring process.

### SUMMARY

The present invention in its various embodiments is as set out in the appended claims.

A container indexing assembly being not part of the claimed invention is provided, comprising an indexing wheel; a conveyor chain configured for receiving a mixed stream of containers from the indexing wheel; and a series of container indexing arms arranged for movement with the conveyor chain, said container indexing arms each configured for indexing a container by its centerline. Each of said indexing wheel, conveyor chain and series of container indexing arms are arranged having a fixed spatial relationship to one another other at linear and non- linear speeds.

A rotary container starwheel being not part of the claimed invention is further provided comprising an upper starwheel; a lower starwheel; and one or more grabber arms. Each of said grabber arms comprises a leading grabber and a trailing grabber having mating spur gears formed there between configured to coordinate movement of the leading grabber with the trailing grabber, a spring configured to actuate the grabber arm to a closed, container grabbing position; and a fixed mechanical cam comprised of a cam wheel having one or more cam lift surfaces configured to contact any one of the leading or trailing grabber arms to actuate opening of the grabber arms.

A rotary multi-feed can lid assembly being not part of the claimed invention is also provided comprising a series of vertical can lid silos an upper rotating indexing plate configured to rotatably support each vertical silo in an indexing hole formed on the upper rotating indexing plate; one or more spring loaded ball detents affixed to rotate with the upper rotating indexing plate on a pivot bearing; and a fixed lower indexing plate, positioned between the upper rotating indexing plate and a lid dispenser. The fixed lower indexing plate is formed with a series of indents, aligned radially with the ball detents to allow extension of the spring loaded ball detents as the ball detents rotate with the upper rotating indexing plate. When the ball detent extends into the recesses, then one of the can lid silos are aligned with a single hole machined in the fixed lower indexing plate such that can lids can pass through the lower plate to the lid dispenser.

A universal closing turret according to the invention is finally provided comprising multiple, varying closure applicators for different types of containers, removably connectable to the turret to allow rearrangement of an order of closure applicators based on an order of types of containers to be closed.

### BRIEF DESCRIPTION OF THE DRAWINGS

A further, detailed, description of the disclosure, briefly described above, will follow by reference to the following drawings of specific embodiments of the disclosure. The drawings depict only typical embodiments of the disclosure and are therefore not to be considered limiting of its scope. In the drawings:
Figure 1 is side elevation view of a container indexing assembly of the present disclosure;
Figure 2 is a top plan view of the container indexing assembly of Figure 1;
Figure 3a is a perspective view of one embodiment of a guideless starwheel assembly of the present invention;
Figure 3b is a bottom plan view of the guideless starwheel assembly of Figure 3A;
Figure 4a is a side perspective view of a multi-silo vertical lid feed of the present disclosure;
Figure 4b is a side elevation view of the multi-silo vertical lid feed of Figure 4a;
Figure 4c is a cross-sectional rear view of the multi-silo vertical lid feed of Figure 4a;
Figure 4d is a top plan view of the multi-silo vertical lid feed of Figure 4a;
Figure 4e is a cross sectional of the multi-silo vertical lid feed of Figure 4a;
Figure 4f is a front side perspective view of the multi-silo vertical lid feed of Figure 4a;
Figure 4g is a cut-away perspective view of the multi-silo vertical lid feed of Figure 4a;
Figure 5 is a top plan view of one example of a system of the present invention; and
Figure 6 is a schematic view of a universal closing turret of the present disclosure.

The drawings are not necessarily to scale and in some instances proportions may have been exaggerated in order to more clearly depict certain features.

It is to be understood that other aspects of the present disclosure will become readily apparent to those skilled in the art from the following detailed description, wherein various embodiments of the disclosure are shown and described by way of illustration. Accordingly the drawings and detailed description are to be regarded as illustrative in nature and not as restrictive.

### DETAILED DESCRIPTION

The description that follows and the embodiments described therein are provided by way of illustration of an example, or examples, of particular embodiments of the principles of various aspects of the present disclosure. These examples are provided for the purposes of explanation, and not of limitation, of those principles and of the disclosure in its various aspects.

The present invention provides multiple devices and systems for handling a mixed stream of containers, including indexing, sorting and closing the mixed stream of containers such as bottles, cans and other containers.

The devices and systems of the present disclosure can be used in conjunction with a filling machine as described in Applicant's US Patent No. 10,407,289.

The devices and systems are described in further detail herein, in conjunction with the Figures. The order in which devices are introduced below is not necessarily indicative of their order or arrangement within overall container handling systems taught by the present disclosure.

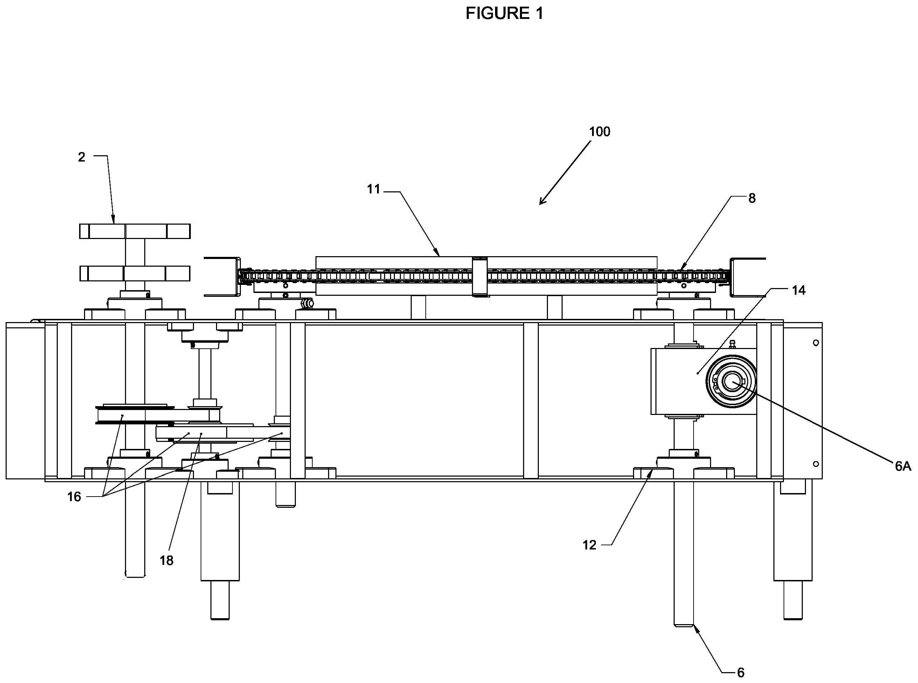

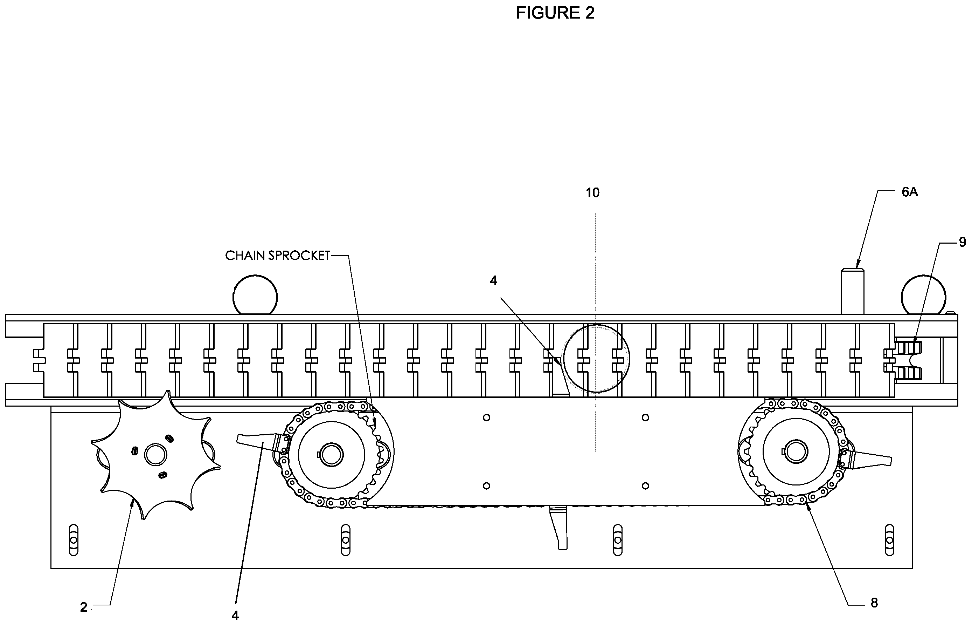

With reference to Figures 1 and 2, a container indexing assembly 100 is shown. The container indexing assembly 100 is non-specific to container type, meaning it can index a mixed stream of containers in any order. The indexing assembly 100 can be mechanically, electrically or pneumatically operated. The container indexing assembly 100 works by indexing containers by their centerline 10, as more clearly shown in Figure 2, such that the type and shape of container does not factor in the indexing process. The indexing assembly 100 includes an indexing wheel 2, and a series of container indexing arms 4 run along a conveyor chain 8 that is driven by a conveyor drive shaft 6, each having a fixed spatial relationship to one another other at linear and non- linear speeds.

The fixed relationship is mechanical in nature. The conveyor driveshaft 6, supported by bearing blocks 12, drives an angled gear reducer 14 which in turn drives the conveyor chain 8. At the other end, movement of the conveyor chain 8 is transferred via one or more belt drive pulleys 16 through a speed reduction assembly 18 to drive the indexing wheel 2. In this way a fixed, mechanical relationship is set between all moving parts of the indexing assembly 100. A right angle gearbox also drives a conveyor drive sprocket 9 via a set ratio through conveyor output shaft 6A, again providing a fixed relationship between the moving parts. The conveyor chain 8 is preferably housed in a guide block 11. This differs from prior art indexing systems which are timed through a container-specific timing device, typically a feedscrew, and in which the elements of the indexing assembly operate in a non-integrated fashion.

The present indexing assembly 100 can be used at the infeed of a container handling system, where containers are received prior to filling, and could also have applications at other locations and steps in container handling processes.

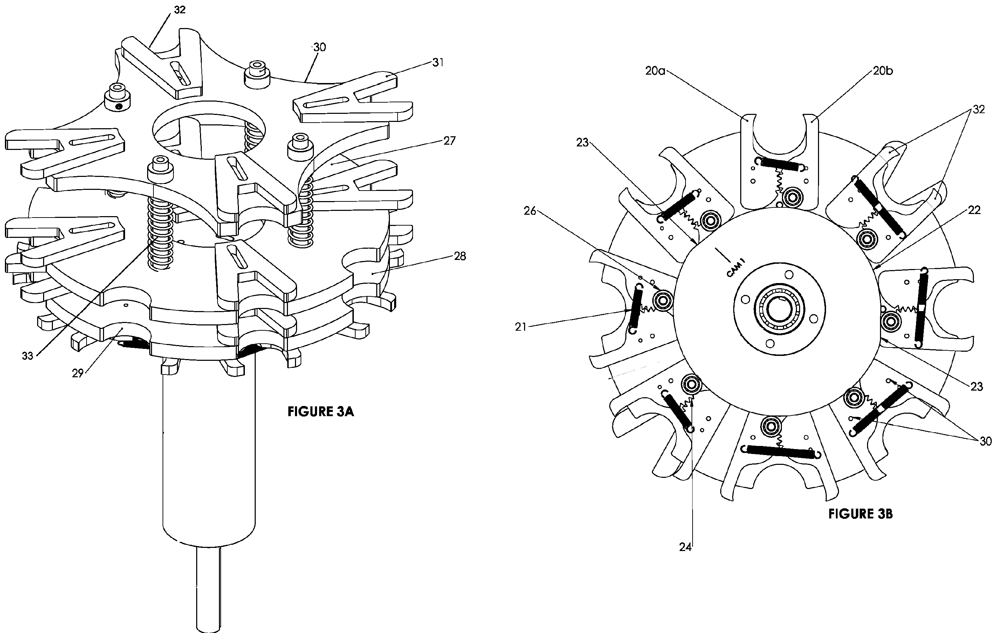

With reference to Figures 3a and 3b, a guideless rotary transfer starwheel 200 is also provided as part of the present disclosure. In traditional systems, starwheels need to be changed for each type of container to be handled, and only one type of container can be handled by each starwheel. By eliminating the need for container specific opposing guides, the present starwheel eliminates the capital cost of incremental change parts and the cost and time involved in operational changeover.

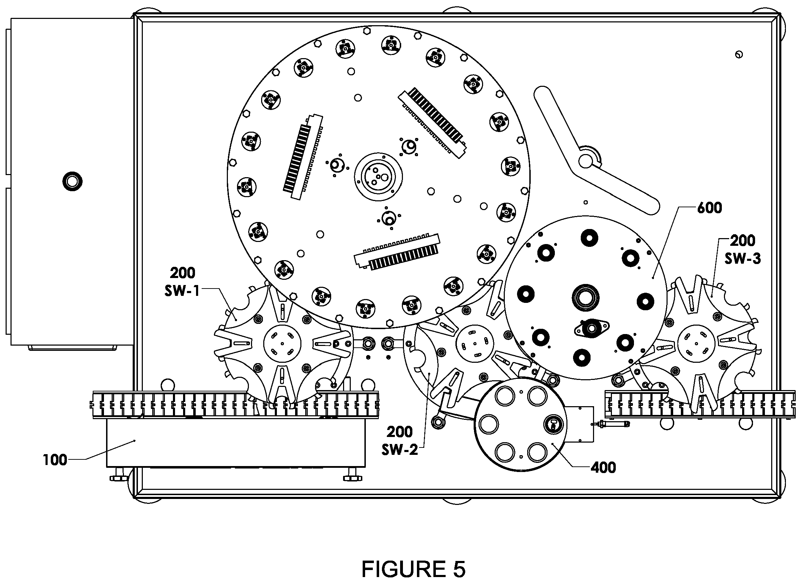

Any number of guideless rotary transfer starwheels can be used through the container handling overall process and system, as illustrated in Figure 5. This includes before filling of the containers, after filling of the containers, before closure of the containers, and at an outfeed of the system overall.

In the embodiment illustrated the present starwheel assembly 200 comprises an upper starwheel 27 and a lower starwheel 28, each formed with multiple container receiving recesses 29, the recesses 29 being generic and sized to accommodate even large containers.

In use, a container is received by the starwheel and individually held by pairs of grabber arms 20, more clearly shown in Figure 3b.

The grabber arms 20 are composed of a leading 20a and trailing 20b grabber that are in one embodiment actuated by a spring 21 to a closed, or grabbing position, and are opened by a fixed mechanical cam comprised of a cam wheel 22 having camming surfaces 23. Alternatively, it is also possible to open the grabber arms 20 by pneumatic or electric actuation means using a control system, without the use of the cam wheel 22. Movement of each trailing 20b and leading grabber arm 20a in a grabber arm pair 20 is mirrored and synchronized to one another by means of mating spur gears 24 formed on an interactive surface of each grabber arm pair that cause relative rotation of each of the leading 20a and trailing 20b grabber arms about their respective pivot points 30. This allows for a single cam lift surface 23 to contact only one of the leading 20a or trailing 20b grabber arms and actuate it to open, while the mating spur gears 24 ensure a similar, but opposite opening movement in the second of the trailing 20b or leading 20a grabber arms. The single set of cam lift surfaces 23 manages operation of the entire starwheel 200 and all grabber arm pairs 20. Contact between the grabber arms 20 and the cam lift surface 23 is delivered through a grabber bearing 26 mounted on the trailing grabber arm of the leading 20a or trailing 20b grabber arms.

The unique grabber arms 20 and sliding V-shaped supports 31 of the present invention accommodate a number of different types of containers such that the variety of containers can be moved by a single starwheel since it is the grabber arms 20 that perform the holding of the container.

With reference to Figure 3a, the starwheel further comprises a self-adjusting container neck guide plate 30 having a series of sliding V-shaped supports 31 that align with similar V-shaped supports formed on the upper starwheel and lower starwheel. The sliding V-shaped supports 31 comprise a v-shaped slot 32 that is capable of radial adjustment. This assists with aligning the container, for example with a centerline of a filling valve of a filler machine in cases where the starwheel 2 is used in conjunction with a filler machine to accommodate differing container neck and body diameters. By incorporating the sliding v-shaped slots 32 and the adjustable grabber arms 20, any container size is accommodated. The sliding V-shaped supports 31 serve to add adjustability to accommodate differing container diameters. In a further preferred embodiment, the upper neck guide plate 30 is supported on the upper starwheel 27 on retractable springs 33 to provide axial upward lift to the upper neck guide plate 30 to accommodate taller containers and bottles.

In a preferred embodiment referenced in 3b, the grabber arms 20 have removable or adjustable tips 32 to accommodate and grip different container sizes.

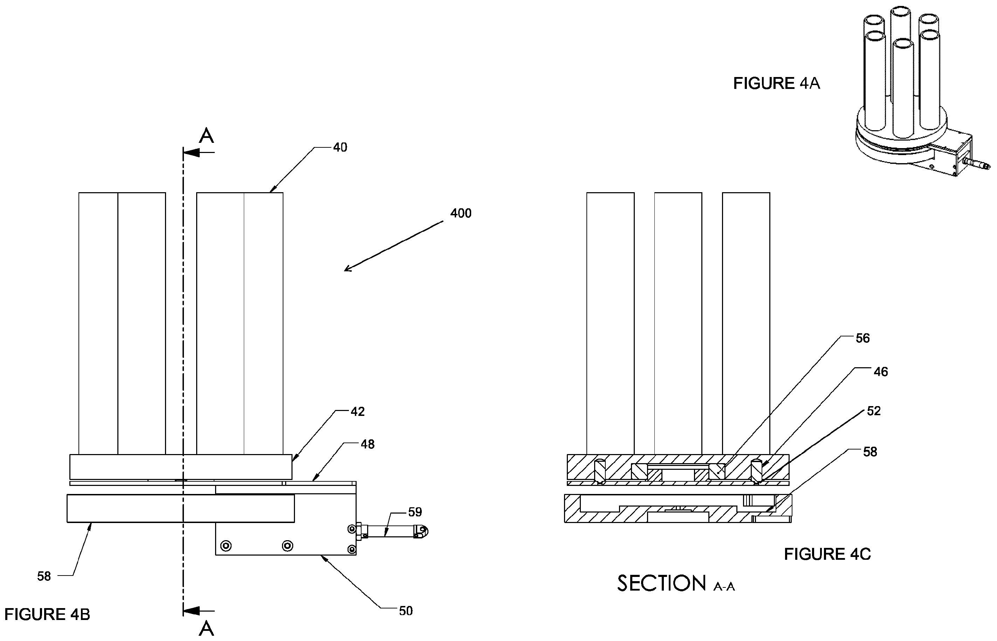

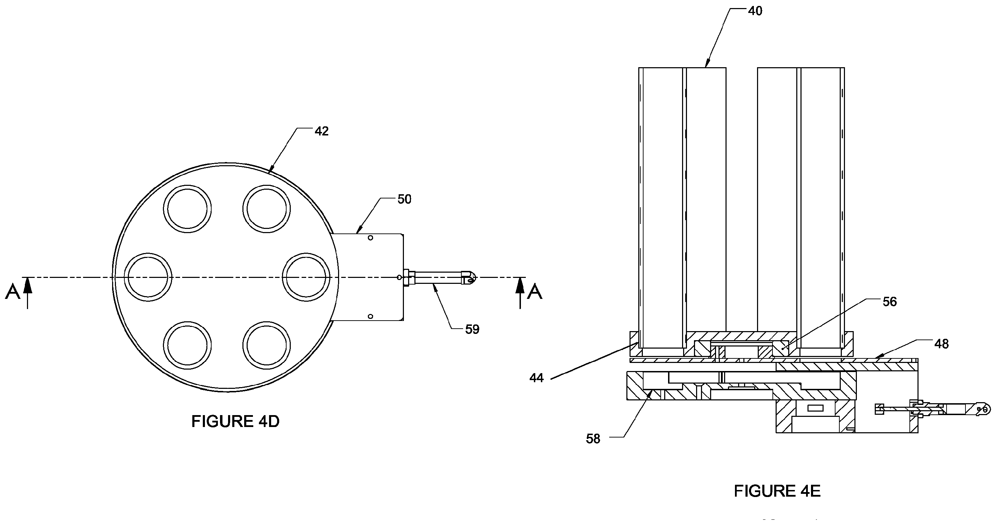

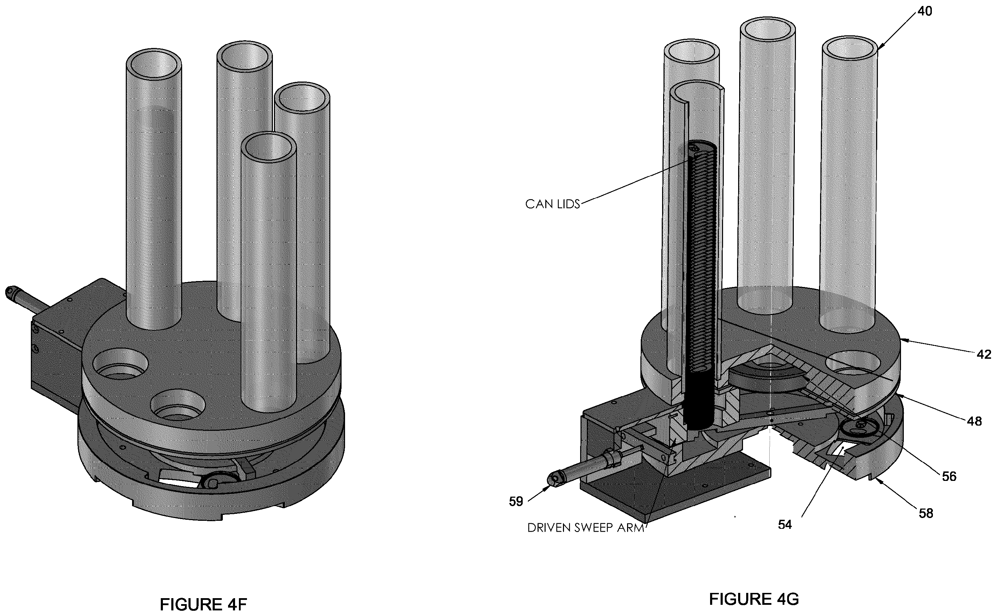

With reference to Figures 4a to 4g, a rotary multi-feed can lid assembly 400 is provided in one aspect of the present disclosure. The multi-feed can lid assembly 400 allows for simple, bulk lid loading.

The multi-feed can lid assembly 400 comprises a series of vertical can lid silos 40 containing can lids or like sleeved closures, that rotate on an upper rotating indexing plate 42. The upper rotating indexing plate 42 is machined with a series of indexing holes 44 for accepting the can lid silos 40. Can lids can be indexed through manual, electric or pneumatic means via a spring loaded detent ball catch and release system, as shown in Figures 4c and 4e. With electrical or pneumatic actuation operator work would be further reduced by eliminating the need for the operator to rotate the indexing plate as each silo empties.

One or more spring loaded ball detents 46 are affixed to rotate with the upper rotating indexing plate 42 on a pivot bearing 56, and extend between the upper rotating plate 42 and a fixed lower indexing plate 48, the fixed lower indexing plate 48 being positioned between the upper rotating indexing plate 42 and a lid dispenser 50. The fixed lower indexing plate 48 is formed with a series of indents or recesses 52, aligned radially with the ball detents 46, which allow extension of the spring loaded ball detents 46 as they rotate with the upper rotating indexing plate 42. When the ball detent 46 extends into the recesses, then one of the can lid silos 40 are aligned with a single hole machined in the fixed lower indexing plate 48 such that can lids can pass through the lower plate 48 to the lid dispenser 50 and on to a lid feed table 58 which is slotted 54 to transfer the closure to the container. The lid dispenser 50 can be pneumatically operated in some optional embodiments by, for example an air cylinder 59.

The catch and release detent ball system allows the present multi-feed can lid assembly 400 to require only a simple non-precise rotating motion to achieve accurate alignment and dispensing of lids. This achieves simple, cheap bulk lid loading. Operator reload of lids is simplified and reload frequency is reduced since multiple silos of lids can be filled at one time, thus freeing the operator for other tasks.

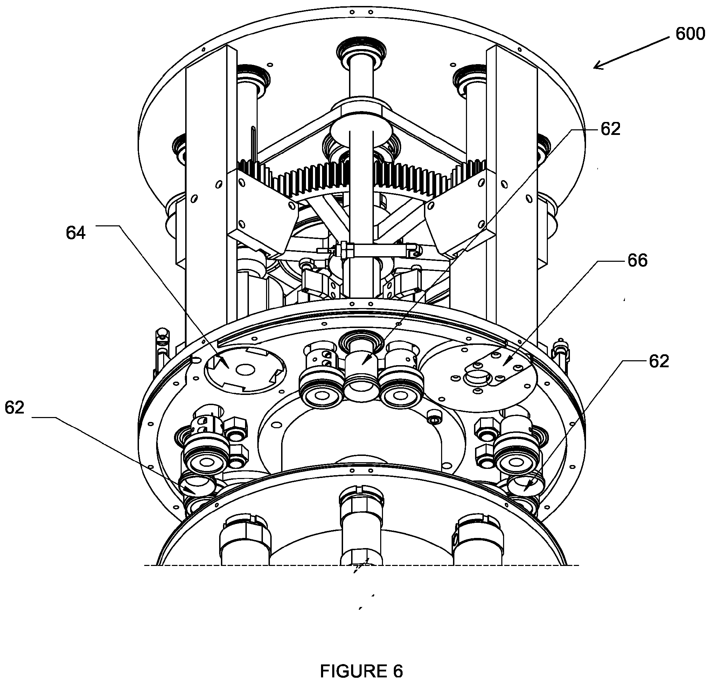

With reference to Figure 6, a universal closing turret 600 of the present disclosure is shown. The universal closing turret 600 comprises a single rotary or inline turret for closing multiple types of containers. The turret comprises closure applicators for different types of containers.

Figure 6 depicts one example of a universal closing turret 600 with an exemplary arrangement of closure applicators. In Figure 6, one or more can closure applicators 62 are interspersed with screw cap style closure applicators 64 such as Stelvin^{™} and Stelvin Lux^{™}, and roll on pilfer-proof closures applicators for use with such containers as wine bottles and also with one or more crimp crown closure applicators 66. The closure applicators can be arranged in various orders on the closing turret to thereby close a specific order of containers. In one example the closure applicators can be arranged in an alternating order to close a stream of alternating types of containers. In other embodiments, the closure applicators can be arranged in a set of any sequence of closure applicators, to close a set of a particular sequence of containers - and the sequence of closure applicators can be repeated as well. The closure applicators are removably connectable to the turret, allowing rearrangement of closure applicators depending on the series and types of containers to be closed.

Typical closing turrets are dedicated based on the container to be closed. As such closing turrets for bottles differ from those for cans and other containers. As previously discussed, the prior art goal has been to maximize handling and closing volume for a specific type of container and produce as great an output as speedily as possible.

The present inventors have noted that by adapting the closure applicator, closing turrets can be customized to close a variety of containers using a singular machine. In doing so, it enables facilities such as micro-manufacturers to purchase, house and operate a single closing turret for a variety of container closing purposes. This serves to maximize flexibility in filling and closing a wide variety of containers/closures combinations within the same machine footprint. The universal closing turret eliminates the need for multiple closing turrets in order to do a wide range of closures.

Figure 5 illustrates one example of a system of the present disclosure including a first starwheel SW1 as taught in the present disclosure, positioned as infeed to a filling machine such as that taught in Applicant's issued Patent No. 10,407,289, a second starwheel SW2 such as taught in the present disclosure, positioned at the outfeed to the filling machine and feeding into a multi-feed can lid assembly 400 of the present disclosure, and/or universal closing turret 600, followed by a third starwheel SW3 as taught by the present disclosure and indexing assembly 100.

Systems of the present disclosure, such as the example shown in Figure 5 can thereby process a stream of mixed container types by simply setting a filler machine with the same order of filler heads as the order of container types being processed and setting the container closure applicator types of the universal closing turret 600 in a similar manner. The present indexing assemblies 100 and starwheel assemblies 200 as used in a system of the present invention have advantageously been designed as described earlier to universally accept multiple container types.

In one example of a method of the present invention, a mixed stream of container types can be received and indexed by a first indexing assembly 100, then fed to a filler machine by a first starwheel SW-1 and filled. The filled, mixed stream of containers can then be fed by a second starwheel SW-2 to a universal closing turret. In the case of the container being cans, the cans are first sorted by the second starwheel SW-2 to the can lid assembly 400 of the present disclosure, before being directed to the universal closing turret 600. The filled and closed mixed stream of containers can then be fed by a third starwheel SW-3 to a second indexing assembly 100 for further processing or packaging.

The previous description of the disclosed embodiments is provided to enable any person skilled in the art to make or use the present disclosure.

Thus, the present disclosure is not intended to be limited to the embodiments shown herein, but is to be accorded the full scope consistent with the claims, wherein reference to an element in the singular, such as by use of the article "a" or "an" is not intended to mean "one and only one" unless specifically so stated, but rather "one or more". All structural and functional equivalents to the elements of the various embodiments described throughout the disclosure that are known or later come to be known to those of ordinary skill in the art are intended to be encompassed by the elements of the claims. Moreover, nothing disclosed herein is intended to be dedicated to the public regardless of whether such disclosure is explicitly recited in the claims.

## Claims

1. A universal closing turret (600) comprising multiple, varying closure applicators (62, 64, 66) for different types of containers, the universal closing turret being **characterized in that** the varying closure applicators are removably connectable to the turret to allow rearrangement of an order of closure applicators based on an order of types of containers to be closed, wherein the closure applicators are arranged in a predetermined order on the closing turret to close that predetermined order of container types, wherein the closure applicators are selected from the group consisting of can closures (62), crimped crown closures (66), screw cap style closures (64) and combinations thereof.

2. The universal closing turret (600) of claim 1, wherein can closure applicators (62) are interspersed with screw cap style closure applicators (64).

3. The universal closing turret (600) of claim 1 or claim 2, wherein roll-on pilfer-proof closures are applied using the screw cap style closure applicators (64).

4. The universal closing turret (600) of any preceding claim, wherein the closure applicators (62, 64, 66) are arranged in various orders on the closing turret thereby to close a specific order of containers.

5. The universal closing turret (600) of any preceding claim, wherein the closure applicators (62, 64, 66) are arranged to close an alternating order of containers.

## Patentansprüche

1. Ein Universalverschlussrevolver (600) umfassend mehrere unterschiedliche Verschlussapplikatoren (62, 64, 66) für verschiedene Behältertypen, wobei der Universalverschlussrevolver **dadurch gekennzeichnet ist, dass** die unterschiedlichen Verschlussapplikatoren abnehmbar mit dem Revolver verbunden werden können, um eine Neuanordnung einer Reihenfolge der Verschlussapplikatoren auf der Grundlage einer Reihenfolge der zu verschließenden Behältertypen zu ermöglichen, wobei die Verschlussapplikatoren in einer bestimmten Reihenfolge auf dem Verschlussrevolver angeordnet sind, um diese bestimmte Reihenfolge von Behältertypen zu verschließen, wobei die Verschlussapplikatoren ausgewählt sind aus der Gruppe bestehend aus Dosenverschlüssen (62), Crimp-Kronenverschlüssen (66), Schraubverschlüssen (64) und Kombinationen davon.

2. Der Universalverschlussrevolver (600) nach Anspruch 1, wobei Dosenverschlussapplikatoren (62) mit Schraubverschlussapplikatoren (64) durchsetzt sind.

3. Der Universalverschlussrevolver (600) nach Anspruch 1 oder Anspruch 2, wobei Roll-on-Diebstahlsicherungsverschlüsse unter Verwendung der Schraubverschlussapplikatoren (64) angebracht werden.

4. Der Universalverschlussrevolver (600) nach einem der vorhergehenden Ansprüche, wobei die Verschlussapplikatoren (62, 64, 66) in verschiedenen Reihenfolgen auf dem Verschlussrevolver angeordnet sind, um dadurch eine bestimmte Reihenfolge von Behältern zu verschließen.

5. Der Universalverschlussrevolver (600) nach einem der vorhergehenden Ansprüche, wobei die Verschlussapplikatoren (62, 64, 66) angeordnet sind, um eine abwechselnde Reihenfolge von Behältern zu verschließen.

## Revendications

1. Tourelle (600) de fermeture universelle comprenant de multiples applicateurs de fermeture (62, 64, 66) variables pour différents types de récipients, la tourelle de fermeture universelle étant **caractérisée en ce que** les applicateurs de fermeture variables peuvent être reliés de manière amovible à la tourelle pour permettre de réorganiser un ordre des applicateurs de fermeture en fonction d'un ordre des types de récipients à fermer, dans laquelle les applicateurs de fermeture sont agencés dans un ordre prédéterminé sur la tourelle de fermeture pour fermer cet ordre prédéterminé de types de récipients, dans laquelle les applicateurs de fermeture sont choisis dans le groupe consistant en fermetures (62) de boîtes, fermetures (66) à couronne sertie, fermetures (64) à vis et leurs combinaisons.

2. Tourelle (600) de fermeture universelle selon la revendication 1, dans laquelle des applicateurs (62) de fermetures pour boîtes sont intercalés avec des applicateurs (64) de fermetures à vis.

3. Tourelle (600) de fermeture universelle selon la revendication 1 ou la revendication 2, dans laquelle des fermetures vissables inviolables sont mises en place à l'aide d'applicateurs (64) de fermetures à vis.

4. Tourelle (600) de fermeture universelle selon une quelconque revendication précédente, dans laquelle les applicateurs de fermetures (62, 64, 66) sont agencés selon divers ordres sur la tourelle de fermeture pour ainsi fermer des récipients selon un ordre spécifique.

5. Tourelle (600) de fermeture universelle selon une quelconque revendication précédente, dans laquelle les applicateurs de fermeture (62, 64, 66) sont agencés pour fermer des récipients selon un ordre alterné.
